## Europäisches Patentamt

## European Patent Office

## Office européen des brevets

(11) Veröffentlichungsnummer: **0 080 025**
**B1**

(12) **EUROPÄISCHE PATENTSCHRIFT**

(45) Veröffentlichungstag der Patentschrift:
14.10.87

(21) Anmeldenummer: **82107422.6**

(22) Anmeldetag: **16.08.82**

(51) Int. Cl.⁴: **G 01 D 11/16**

(54) **Analog-Anzeigeeinrichtung, insbesondere Tachometer.**

(30) Priorität: **19.11.81 DE 3145780**

(43) Veröffentlichungstag der Anmeldung:
**01.06.83 Patentblatt 83/22**

(45) Bekanntmachung des Hinweises auf die Patenterteilung:
**14.10.87 Patentblatt 87/42**

(84) Benannte Vertragsstaaten:
**DE FR GB NL SE**

(56) Entgegenhaltungen:
**DE-A-2 730 699**
**DE-A-2 912 362**
**DE-A-2 946 328**
**US-A-3 512 066**
**US-A-3 818 261**
**US-A-3 886 459**

(73) Patentinhaber: **VDO Adolf Schindling AG,**
**Gräfstrasse 103, D-6000 Frankfurt/Main (DE)**

(72) Erfinder: **Lindig, Christian, Rossertstrasse 5a,**
**D-6233 Kelkheim / Ts. 4 (DE)**

(74) Vertreter: **Könekamp, Herbert, Dipl.- Ing., Sodener**
**Strasse 9, D-6231 Schwalbach (DE)**

LIBER, STOCKHOLM 1987

## Beschreibung

Die Erfindung betrifft eine Analog-Anzeigeeinrichtung, insbesondere einen Tachometer nach dem Oberbegriff des Anspruchs 1. Bei dem hier genannten Tachometer handelt es sich um einen sogenannten elektronischen Tachometer, bei dem eine der Geschwindigkeit des Fahrzeugs proportionale Pulsfrequenz ausgewertet wird, um mittels eines Schrittmotors einen Zeiger bzw. eine Tachometernadel zu verstellen. Die Analog-Anzeigeeinrichtung der oben genannten Gattung ist aber nicht auf elektronische Tachometer beschränkt, sondern bezieht sich generell auf eine Anzeigeeinrichtung für Zustandsgrössen, die in analoger Form darzustellen sind.

In einer bekannten Analog-Anzeigeeinrichtung der eingangs genannten Gattung wird ein Zeiger durch einen reversierbaren Schrittmotor über ein Getriebe ausgelenkt. Ein Zahnrad des Getriebes, auf dessen Achse der Zeiger montiert ist, weist einen annähernd halbkreisförmigen Ausschritt auf, in den ein Anschlagstift hineinreicht. Dieser Anschlagstift begrenzt den Zeigerausschlag in der Nullstellung und in der Endausschlagsstellung. - Der Schrittmotor wird durch einen Impulsganerator mit einem Vorbereitungseingang über eine Schrittmotor-Steuerschaltung gespeist. Der Impulsgenerator speist ausserdem einen Vorwärts-Rückwärts-Zähler, dessen Ausgänge mit einer Vergleichsschaltung verbunden sind. Die Vergleichsschaltung steht andererseits mit Messwerteingängen in Verbindung, in die dem Messwert entsprechende Signale in der gleichen digitalen Form eingespeist werden wie der Zählerstand des Vorwärts-Rückswärts-Zählers abgegeben wird. Ausgänge der Vergleichsschaltung stehen einerseits über ein UND-Glied mit einem Vorwärts-Rückwärts-Steuereingang des Vorwärts-Rückwärts-Zählers und eine Vorwärts-Rückwärts-Steuerung der Schrittmotorsteuerschaltung in Verbindung und andererseits über ein zweites UND-Glied mit dem Vorbereitungseingang des Impulsgenerators. Zwei weitere Eingänge der genannten ersten und zweiten UND-Glieder werden von dem Ausgang einer Kippstufe gesteuert, die einen Rückstelleingang zur Aufnahme eines Rückstellsignals aufweist. Das Rückstellsignal bildet in Verbindung mit der Kippstufe einen Rückstellbefehl für den Impulsgenerator. Bei Auftreten eines Rückstellsignals wird der Vorwärts-Rückwärts-Zähler auf Null zurückgestellt und die Kippstufe in eine Lage gekippt, die an den Vorbereitungseingang des Impulsgenerators einen Rückstellbefehl abgibt. Der Impulsgenerator liefert dann sowohl Impulse über die Schrittmotorsteuerschaltung an den Schrittmotor als auch an den Vorwärts-Rückwärts-Zähler. Dadurch zählt der Vorwärts-Rückwärts-Zähler rückwärts, und der Schrittmotor stellt den Zeiger Schritt um Schritt zurück. Dieser Vorgang läuft so lange ab, bis die Zählkapazität des Vorwärts-Rückwärts-Zählers erreicht ist, d.h. es wird stets die gleiche Anzahl von Impulsen zur Rückstellung an den Schrittmotor abgegeben. Während dieses Vorgangs gelangt der Ausschnitt in dem mit dem Zeiger verbundenen Zahnrad in der Nullstellung des Zeigers zwangsläufig in Eingriff mit dem Anschlagstift, wodurch der Zeiger in der Nullstellung angehalten wird. In dieser Stellung sind Zeiger und Vorwärts-Rückwärts-Zähler miteinander synchronisiert. Der Rückstellvorgang kann bei jedem Einschalten der Analog-Anzeigeeinrichtung oder mit Hilfe eines Detektors erfolgen (DE-A-29 46 328).

Nachteilig ist bei dieser Analog-Anzeigeeinrichtung, dass der Anschlag in der Nullstellung über das Getriebe mit einem beträchtlichen Moment des Schrittmotors belastet wird, wenn der Zeiger nicht von seinem Vollausschlag, sondern von einem niedrigeren Wert aus zurückgestellt wird. Hinzu kommt das Schwungmoment des Motors mit dem Getriebe, das die Beanspruchung des Anschlags und des Getriebes weiter erhöht, so dass im Blick auf die Belastung durch das normale Antriebsmoment des Motors die Rückstellung mit begrenzter Geschwindigkeit erfolgen muss, wenn das Getriebe nicht mit hohen Festigkeitseigenschaften und dadurch mit einem grösseren Trägheitsmoment konstruiert ist.

Zu der vorliegenden Erfindung gehört daher die Aufgabe, eina Analog-Azeigeeinrichtung der eingangs genannten Gattung mit einer Rückstellung des Schrittmotors mit einer konstanten Impulszahl so weiterzubilden, dass die Belastung der mechanischen Teile der Anzeigeeinrichtung, insbesondere des Anschlags und des Getriebes verhältnismässig gering ist, und dass trotzdem die Rückstellung rasch und zuverlässig erfolgt.

Diese Aufgabe wird durch die in dem Anspruch 1 angegebene Erfindung gelöst.

Dadurch, dass der Schrittmotor zu Beginn der Rückstellphase zunächst mit einer verhältnismässig niederfrequenten Impulsenfolge beaufschlagt wird, deren Frequenz unterhalb der Start-Stop-Frequenz des Schrittmotors liegt, läuft der Schrittmotor zuverlässig und synchron zu den Impulsen an. Erst anschliessend wird die Pulsfrequenz gesteigert, und zwar auf Werte oberhalb der Start-Stop-Frequenz. Damit wird nicht nur die Rückstellung beschleunigt, sondern es fällt infolge der üblichen Charakteristik des Schrittmotors das Antriebsmoment mit steigender Frequenz ab. Dies hat die erwünschte Folge, dass das Antriebsmoment dann verhältnismässig gering ist, wenn der Anschlag bei der Nullstellung des Zeigers erreicht wird. In dieser Analog-Anzeigeeinrichtung können also die mechanischen Teile verhältnismässig massearm ausgebildet sein. Trotz der beschleunigten Rückstellung wird die Synchronisation zwischen Zeigerstellung und Impulszahl erhalten, d.h. der Zeiger wird auch aus dem Vollausschlag zuverlässig zurückgestellt.

Eine besonders wenig aufwendige Realisierung der Analog-Anzeigeeinrichtung mit dem gesteuerten Impulsgenerator besteht darin, dass dieser als Rampengenerator ausgebildet ist, der die Pulsfrequenz von unterhalb der Start-Stop-Frequenz bis zur maximalen Betriebsfrequenz des Schrittmotors steigert. Durch diesen Rampengenerator wird auch eine besonders zuverlässige Synchronisasion der Schrittmotorbewegung mit den speisenden Impulsen erzielt. Bei einer Anwendung dieser Rückstellung für einen Tachometer, der bei Ausstellen der Zündung bzw. bei Verschwinden der Batteriespannung zurückgestellt werden soll, ist der Impulsgenerator durch einen Spannungsdetektor steuerbar. Die Analog-Anzeigeeinrichtung kann nach Ausschalten der normalen Batteriespannung über eine andere Verbindung zu der Batterie oder durch eine Hilfsbatterie gespeist werden.

Die Analog-Anzeigeeinrichtung mit einem den Zeiger antreibenden Zahnrad, welches mit dem Schrittmotor in Verbindung steht, ist hinsichtlich der mechanischen Teile beispielweise so ausgebildet, dass das Zahnrad einen dem Endanschlag des Zeigers proportionalen Ausschnitt aufweist, der in Verbindung mit einem ortsfesten Anschlagstift zwei Endanschläge bildet.

Da bei diesen Anschlägen der ortsfeste Anschlagstift nicht unmittelbar mit dem Zeiger in Berührung kommt, eignet er sich besonders zur Rückstellung mit einer Zahl Impulsen, die grösser ist als bis zum Erreichen des Anschlags in Nullstellung notwendig. Der Ausschnitt des Zahnrads kann die Impulse und Kräfte beim Auftreffen des Anschlagstifts besser aufnehmen als unmittelbar der Zeiger.

Aus der US-A-3 512 066 ist eine Schaltung zum Beschleunigen und Abbremsen eines Schrittmotors bekannt. Bei dieser Schaltung speist ein Funktionsgenerator einen spannungsgesteuerten Oszillator bei Bedarf mit einer rampenförmig ansteigenden bzw. abfallenden Spannung. Der Oszillator seinerseits führt dem Schrittmotor einen Puls zu, dessen Frequenz von der vom Funktionsgenerator gelieferten Spannung abhängt, d.h. ansteigen und abfallen kann. Weiterhin geht es aus dieser Druckschrift als bekannt hervor, dass der Schrittmotor bei niedrigen Geschwindigkeiten ein maximales Antriebsmoment abgibt.

Ein Ausführungsbeispiel der Erfindung wird im folgenden anhand einer Zeichnung erläutert, in der der elektronische Teil für die Rückstellung der Analog-Anzeigeeinrichtung als Blockschaltbild dargestellt ist:

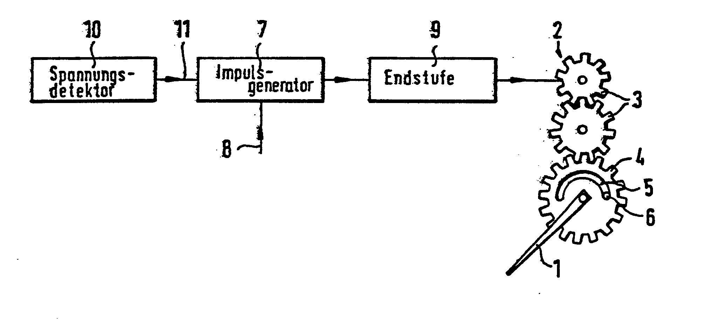

In der Zeichnung ist mit 1 ein Zeiger eines elektronischen Tachometers dargestellt, der durch einen reversierbaren Schrittmotor angetrieben wird. Der Schrittmotor 2 steht über ein Getriebe 3 mit einem Zahnrad 4 in Verbindung, welches direkt mit dem Zeiger gekuppelt ist und um die gleiche Achse drehbar ist. Das Zahnrad 4 weist einen dem Endausschlag des Zeigers proportionalen Ausschnitt 5 auf. Durch den Ausschnitt reicht ein ortsfester Anschlagstift 6, der in der in der Zeichnung dargestellten Drehstellung des Zahnrads 4 den Endanschlag in der Nullstellung bildet und an den entgegengesetzten Ende des Ausschnitts den Anschlag für Vollausschlag.

Zu der Anzeige der gefahrenen Geschwindigkeit des Fahrzeugs wird ein Impulsgenerator 7 über einen Steuereingang 8 so mit einem Geschwindigkeitssignal gesteuert, dass der Impulsgenerator einen die Geschwindigkeitsänderung nach Betrag und Grösse definierenden Puls an eine Endstufe 9 und von dieser an den Schrittmotor 2 abgibt. Durch diesen Vorgang ist die Stellung des Zeigers stets proportional der Geschwindigkeit.

Wird das Fahrzeug abgestellt, so wird die Unterbrechung der Spannung durch das Zündschloss durch einen Spannungsdetektor 10 erfasst. Der Spannungsdetektor gibt einen Rückstellbefehl in einen zweiten Steuereingang 11 des Impulsgenerators 7. Dadurch wird der Impulsgenerator veranlasst, eine konstante Impulszahl an die Endstufe 9 abzugeben, die so gross ist, dass der Zeiger auch aus der Vollausschlagstellung auf Null zurückgestellt wird. Dabei stösst in jedem Fall der Anschlagstift 6 an das der Nullstellung zugeordnete Ende des Ausschnitts 5 an. Dieser Puls wird aber nicht mit konstanter Frequenz abgegeben, sondern - da der Impulsgenerator einen Rampengenerator umfasst - in der Weise, dass die ersten Impulse mit einer Pulsfrequenz unterhalb der Start-Stop-Frequenz des Schrittmotors 2 erzeugt werden und erst die anschliessenden Impulse auf eine Pulsfrequenz oberhalb der Start-Stop-Frequenz hochlaufen. Damit läuft in jedem Fall der Schrittmotor 2 zuverlässig an, um auch bei Überwindung des Haftreibungsmoments in jedem Fall synchron zu der Impulszahl zurückgestellt zu werden Erst anschliessend wird die Geschwindigkeit der Rückstellung erhöht mit der erwünschten Folge, dass das Antriebsmoment des Schrittmotors abfällt, so dass der Ausschnitt 5 des Zahnrads 4 nur unter einem verhältnismässig geringen Motormoment an den Anschlagstift 6 angeschlagen wird. Da in den meisten Fällen in der Nullstellung des Zeigers noch weitere Impulse zur Rückstellung von dem Impulsgenerator abgegeben werden, wird der Zeiger in dieser Lage festgehalten, was ebenfalls erwünscht ist, da das Haltemoment des Schrittmotorsverhältnismässig gering ist.

Die Pulsfrequenz, mit der die Impulse oberhalb der Start-Stop-Frequenz zur Rückstellung abgegeben werden, soll unterhalb der maximalen Betriebsfrequenz des Schrittmotors liegen, um den Schrittmotor in jedem Fall synchron zu den Impulsen anzutreiben.

## Patentansprüche

1. Analog-Anzeigeeinrichtung, insbesondere Tachometer, mit einem durch einen reversierbaren Schrittmotor (2) verstellbaren Zeiger (1), der durch den Schrittmotor (2) zu einem Anschlag (6) hin rückstellbar ist, sowie mit einem durch einen Rückstellbefehl gesteuerten Impulsgenerator (7), der, gegebenenfalls über eine Schrittmotorsteuerschaltung, eine konstante Anzahl von Impulsen nach jedem Rückstellbefehl an den Schrittmotor (2) abgibt, dadurch gekennzeichnet, dass der gesteuerte Impulsgenerator (7) zur Abgabe eines Teils der konstanten Anzahl Impulse zunächst mit einer Pulsfrequenz unterhalb einer Start-Stop-Frequenz des Schrittmotors (2) und zur Abgabe des Rests der konstanten Anzahl Impulse anschliessend mit einer Pulsfrequenz oberhalb der Start-Stop-Frequenz eingerichtet ist.

2. Analog-Anzeigeeinriehtung nach Anspruch 1, dadurch gekennzeichnet, dass der Impulsgenerator (7) als Rampengenerator ausgebildet ist, der die Pulsfrequenz von unterhalb der Start-Stop-Frequenz bis zur maximalen Betriebsfrequenz des Schrittmotors (2) steigert.

3. Analog-Anzeigeeinrichtung nach Anspruch 1 oder 2, dadurch gekennzeichnet, dass zur Rückstellung des Schrittmotors (2) der Impulsgenerator (7) durch einen Spannungsdetektor (10) steuerbar ist.

## Claims

1. Analog indicating device, especially a tachometer, with a pointer (1) which is adjustable by a reversible stepping motor (2) and which is resettable by the stepping motor (2) towards a stop (6), also with a pulse generator (7) which is controlled by a reset instruction and which, possibly through the agency of a stepping motor control circuit, emits a constant number of pulses to the stepping motor (2) after each reset instruction, characterised in that the controlled pulse generator (7) is arranged first with a pulse frequency which is below a start-stop frequency of the stepping motor (2) for emitting a proportion of the constant number of pulses, and then with a pulse frequency which is above the start-stop frequency for emitting the remainder of the constant number of pulses.

2. Analog indicating device according to claim 1, characterised in that the pulse generator (7) is constructed as a ramp generator which increases the pulse frequency from below the start-stop frequency up to the maximum operating frequency of the stepping motor (2).

3. Analog indicating device according to claim 1 or 2, characterised in that for resetting the stepping motor (2) the pulse generator (7) is adapted to be controlled by a voltage detector (10).

## Revendications

1. Dispositif d'affichage analogique, en particulier tachymètre, comprenant un index (1) qui peut être réglé par l'intermédiaire d'un moteur pas à pas (2) réversible et qui peut être rappelé en direction d'une butée (6) par l'intermédiaire dudit moteur pas à pas (2), ainsi qu'un générateur (7) d'impulsions qui est commandé par une instruction de remise à zéro et qui, éventuellement par l'intermédiaire d'un circuit de commande du moteur pas à pas, délivre à ce moteur pas à pas (2) un nombre constant d'impulsions après chaque instruction de remise à zéro, caractérisé par le fait que le générateur (7) d'impulsions commandé est tout d'abord activé avec une fréquence pulsatoire inférieure à une fréquence de marche-arrêt du moteur pas à pas (2), en vue de délivrer une part du nombre constant d'impulsions, puis avec une fréquence pulsatoire supérieure à ladite fréquence de marche-arrêt, afin de délivrer le reste du nombre constant d'impulsions.

2. Dispositif d'affichage analogique selon la revendication 1, caractérisé par le fait que le générateur (7) d'impulsions est réalisé sous la forme d'un générateur à rampe(s), qui fait augmenter la fréquence pulsatoire d'une valeur inférieure à la fréquence de marche-arrêt jusqu'à la fréquence maximale de service du moteur pas à pas (2).

3. Dispositif d'affichage analogique selon la revendication 1 ou 2, caractérisé par le fait que, pour remettre le moteur pas à pas (2) à zéro, le générateur (7) d'impulsions peut être commandé par l'intermédiaire d'un détecteur (10) de tension.

0 080 025

| Spannungs-detektor | Impuls-generator | Endstufe |

1